# EUROPÄISCHE PATENTSCHRIFT

(11) **EP 1 837 138 B1**
(45) Veröffentlichungstag und Bekanntmachung des Hinweises auf die Patenterteilung: **13.03.2013**
(21) Anmeldenummer: 07005736.9
(22) Anmeldetag: 21.03.2007
(51) Int. Cl.: B26D 7/26, B26F 1/40

(54) **Stanzwerkzeug zum Austrennen von tiefgezogenen Formteilen aus einer Folienbahn**
Die cutting tool for separating deep drawn moulded parts from a film web
Outil de découpage destiné à séparer les pièces embouties d'une bande de feuille

(30) Priorität: 24.03.2006 DE 10613556
(43) Veröffentlichungstag der Anmeldung: 26.09.2007
(73) Patentinhaber: ILLIG Maschinenbau GmbH & Co. KG, 74081 Heilbronn (DE)
(72) Erfinder: Köstel, Oliver, 71067 Sindelfingen (DE); Greiner, Peter, 69168 Wiesloch (DE); Häberle-Kelm, Achim, 74360 Ilsfeld-Helfenberg (DE)

(56) Entgegenhaltungen:
- EP-A1- 0 947 306
- WO-A-01/41984
- CH-A- 447 461
- DE-A1- 3 143 606
- DE-A1- 4 301 200
- DE-A1- 4 304 951
- NL-C1- 1 020 778
- US-B1- 6 246 922

## Beschreibung

Die Erfindung betrifft ein Stanzwerkzeug zum Austrennen von tiefgezogenen Formteilen aus einer Folienbahn nach der Gattung des Hauptanspruches.

Aus der DE 43 01 200 A1 ist ein gattungsbildendes Stanzwerkzeug bekannt, bei dem sich die Schnittlinie kurz vor dem Ausstanzen des Formteils mittels eines Zentrierkörpers so ausrichtet, dass sie an der richtigen Position zum Formteil zu liegen kommt. Ein Stanzversatz soll auf diese Weise vermieden werden, der unter anderem durch unterschiedlichen Follenschrumpf zustande kommen kann. Das Stanzwerkzeug ist am Obertisch der Stanzstation befestigt, die Schnittlinie sitzt an einem Segment, das Rollen aufweist, die auf Gleitflächen, die mit der Grundplatte des Stanzwerkzeuges verbunden sind, abrollen können. Probleme treten jedoch dadurch auf, dass bei einem versetzten Auftreffen der Zentrierkörper auf das Formteil zumindest die rollende Reibung überwunden werden muss. Es besteht ferner die Gefahr, dass das Segment durch die erforderliche Verschiebekraft abgehoben und mit der oberen Fläche gegen die Grundplatte gedrückt wird. Sofort entsteht eine Reibkraft, wodurch eine Verschiebung behindert wird.
In der Praxis ist diese Lösung nur geeignet, um an einem Obertisch befestigt zu werden. Baut man ein solches Stanzwerkzeug auf einen Untertisch, also um 180° versetzt auf, müsste man die Rollen zwischen Grundplatte und Segment anordnen. Die Kraft, um die Rollreibung zu überwinden, ist bei dünnwandigen Formteilen - und diese liegen in der Regel vor - zu groß, sodass die Gefahr einer Deformation der Formteile besteht und nicht die richtige Schneidlage erreicht wird.

Der Erfindung liegt die Aufgabe zugrunde, ein Stanzwerkzeug zum Austrennen von tiefgezogenen Formteilen aus einer Folienbahn so auszubilden, dass bei Anordnung auf einem Untertisch eine leichte Zentrierung der Schnittlinie ohne Gefahr der Deformation des Formtells gegeben ist und deshalb ein lagegenauer Schnitt erfolgt.

Gelöst ist diese Aufgabe durch ein Stanzwerkzeug mit den Merkmalen des Anspruchs 1

Ausführungsbeispiele der Erfindung sind anhand der schematischen Zeichnungen näher beschrieben. Es zeigen:

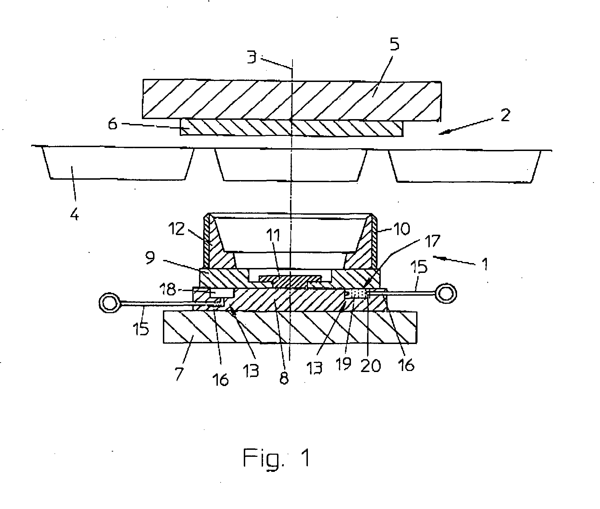

- Figur 1: einen Querschnitt durch das Stanzwerkzeug
- Figur 2: eine Draufsicht auf das Stanzwerkzeug gemäß Figur 1
- Figur 3: einen Querschnitt durch ein zweireihiges Stanzwerkzeug
- Figur 4: eine vergrößerte Darstellung der Einzelheit Y in Figur 3

Das Stanzwerkzeug besteht aus einem Unterteil 1 und einem Oberteil 2 und wird in die Stanzstation 3 einer Thermoformmaschine eingebaut, die in eine Follenbahn aus thermoplastischem Kunststoff Formteile 4 durch Tiefziehen mittels Differenzdruck einformt. In der Stanzstation 3 erfolgt das Austrennen der Formteile 4 meist in der Weise, dass die Formteile 4 noch an kleinen Stegen mit der Folienbahn verbunden sind und so an dieser hängend einer nachgeordneten Stapelstation zugeführt werden können. Die verformte Follenbahn wird über eine nicht dargestellte Transporteinrichtung intermittierend bewegt.
Die Stanzstation 3 weist einen starren oder einen höhenverschiebbaren Obertisch 5 auf, an dem das Oberteil 2 des Stanzwerkzeuges befestigt ist. Im einfachsten Fall besteht dieses Oberteil 2 nur aus einem auswechselbaren Stanzblech 6 oder einem Stanzrahmen mit der Gestalt der auszustanzenden Formteile 4 im Bereich der Stanzlinie. Bei positiv/negativ verformten Formteilen 4 sind ein solcher Stanzrahmen und eine Höhenverschiebung des Obertisches 5 erforderlich.
Auf dem Untertisch 7 sitzt das Unterteil 1 des Stanzwerkzeuges, das eine Grundplatte 8 aufweist, auf der einzelne Segmente 9 verschiebbar zu dieser angeordnet sind. Die Segmente 9 tragen eine Schnittlinie 10 mit der Kontur der auszutrennenden Formteile 4. Eine horizontale Verschiebemöglichkeit der Segmente 9 auf der Grundplatte 8 wird dadurch herbeigeführt, dass keine feste Verbindung mit dieser gegeben ist, sondern über Halteelemente 11 erreicht wird, dass die horizontale Verschiebemöglichkeit begrenzt wird und ein vertikales Abheben der Segmente 9 nur um ein bestimmtes geringes Maß erfolgen kann.

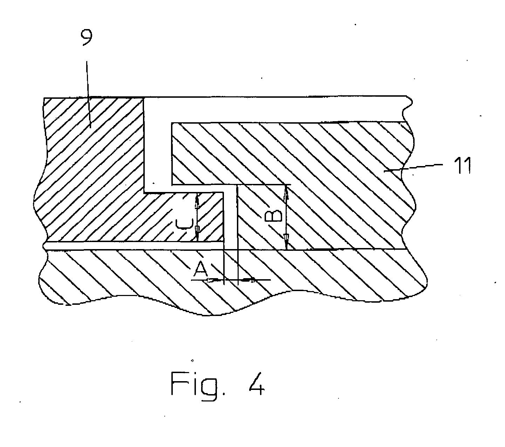

In der Figur 4 sind Halteelemente 11 vergrößert dargestellt. Die horizontale Verschiebung der Segmente 9 ist um ein Maß A möglich, die vertikale Verschiebung um ein Maß B abzüglich C.
Im Innem der Segmente 9 sind ringsum oder an örtlichen Stellen Zentriereinrichtungen 12 angeordnet, die der Gestalt des auszutrennenden Formtells 4 angepasst sind.
Zwischen der den Segmenten 9 zugeordneten Oberfläche der Grundplatte 8 und den Segmenten 9 ist eine Einrichtung 13 angeordnet, die einen Ausgleich des Gewichts der Segmente 9 herbeiführt, sodass diese auf der Grundplatte 8 schweben oder nur mit einer geringen Kraft auf der Grundplatte 8 aufliegen oder am Halteelement 11 anliegen. Optimal ist natürlich ein Schweben, weil dann keine Kraft für eine horizontale Verschiebung der Segmente 9 erforderlich ist. Aber auch eine geringe erforderliche Verschiebekraft ist je nach Formteil 4 überwindbar, wenn beim Schließen der Stanzstation 3 durch das Aufeinandertreffen von Formteil 4 und Zentriereinrichtung 12 ein Verschieben der Segmente 9 In die richtige Stanzposition erfolgen muss.

Bezüglich der Gestaltung der Einrichtung 13 für den Gewichtsausgleich wird eine Lösung vorgeschlagen, die eine Druckluftzufuhr 15 aufweist, die über Bohrungen 16 zu Luftaustrittsöffnungen 17 an der Oberfläche der Grundplatte 8 führt. Diese treffen auf das Segment 9. Über die Druckluftzufuhr 15 wird ein Luftpolster zwischen Segment 9 und Grundplatte 8 aufgebaut, auf dem das Segment 9 gleitend schwimmt. Über die Höhe des über einen Druckregler einstellbaren Druckes kann eine leichte Anpassung an das Gewicht des Segments 9 erreicht werden. Das Zuschalten der Druckluft zum Erzeugen des Luftpolsters erfolgt kurzzeitig vor dem Schließen der Stanzstation 3 oder dauernd.

Die Luftaustrittsöffnungen 17 sind vorzugsweise mit einer Ansenkung 18 oder mit einem Luftaustrittselement 19 ersehen. Letzteres weist mehrere Austrittsbohrungen oder Austrittsschlitze auf oder besteht aus einem Sinterteil, ist dann also porös und aus Metall, Kunststoff oder Keramik gefertigt. In diesem Fall wird eine besonders gute Luftzufuhr zur Erzeugung eines Luftpolsters erzielt. Diese Luftzufuhr wird durch einen ringsum verlaufenden Kanal 20 besonders günstig beeinflusst, wenn auf diesen die Bohrung 16 zur Luftzufuhr trifft.

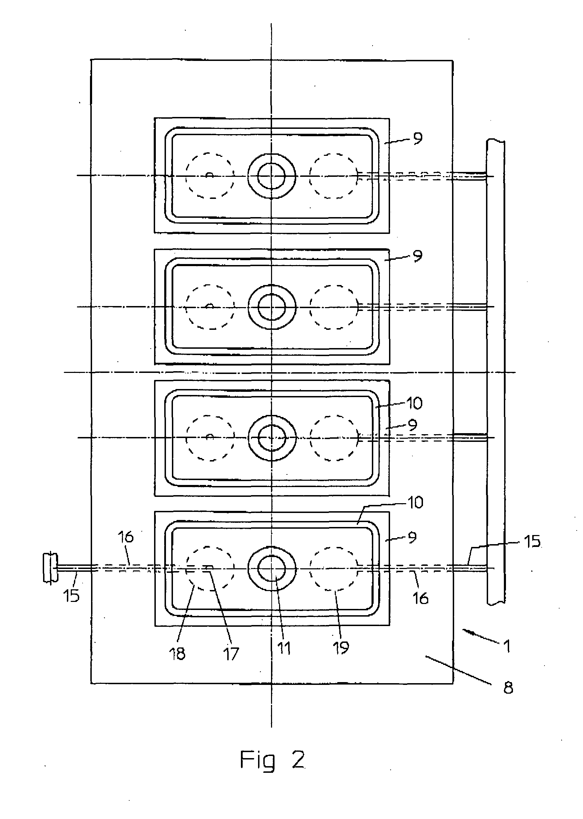

Das Stanzwerkzeug ist so ausgebildet, dass es einen in der vorgeschalteten Formstation ausgeformten Nutzen ausstanzen kann. Dieser weist oft mehrreihig Formteile 4 auf, pro Reihe sind ebenfalls meist mehrere Formteile 4 ausgeformt. Figur 2 zeigt eine Draufsicht auf ein Unterteil 1 zum Ausstanzen eines einreihigen Nutzens mit vier Formteilen 4. In besonderer Ausbildung der Erfindung wird vorgeschlagen, jedem Formteil 4 ein eigenes, frei horizontal verschiebbares Segment 9 zuzuordnen, das in der beschriebenen Weise mit einer Einrichtung 13 zum Gewichtsausgleich versehen ist. So kann bei einem Verzug der Follenbahn jede Schnittlinie 10 optimal positioniert werden und stanzt genau an der richtigen Stelle das Formteil 4 aus.

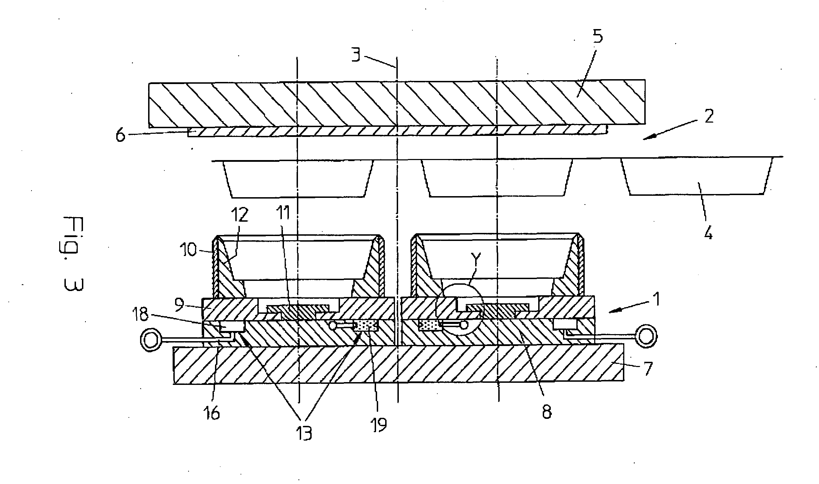

Figur 3 zeigt einen Querschnitt durch ein zweireihiges Stanzwerkzeug. Hier ist es prinzipiell ebenso möglich, jedem Formteil 4 ein eigenes, frei horizontal verschiebbares Segment 9 zuzuordnen. Kostensparender ist es, nur alle Schnittlinien 10 einer Reihe auf ein Segment 9 zu setzen, sodass also insgesamt zwei Segmente 9 vorliegen. Damit kann immerhin ein Verzug zwischen zwei Reihen ausgeglichen werden, jedoch kein eventueller Querverzug zwischen Formteilen 4 in einer Reihe.

### Bezugszeichenliste

| | | | |
|---|---|---|---|
| 1 | Unterteil | | |
| 2 | Oberteil | | |
| 3 | Stanzstation | | |
| 4 | Formteil | | |
| 5 | Obertisch | | |
| 6 | Stanzblech | | |
| 7 | Untertisch | | |
| 8 | Grundplatte | | |
| 9 | Segment | | |
| 10 | Schnittlinie | | |
| 11 | Halteelement | | |
| 12 | Zentriereinrichtung | | |
| 13 | Einrichtung | | |
| 15 | Druckluftzufuhr | | |
| 16 | Bohrung | | |
| 17 | Luftaustrittsöffnung | | |
| 18 | Ansenkung | | |
| 19 | Luftaustrittselement | | |
| 20 | Kanal | | |

## Patentansprüche

1. Stanzwerkzeug zum Austrennen von tiefgezogenen Formteilen aus einer Folienbahn zum Einbau auf einen höhenbeweglichen Untertisch in einer Stanzstation einer Thermoformmaschine, bestehend aus einer Grundplatte und auf dieser angeordneten Segmenten mit Schnittlinien mit der Stanzkontur der auszutrennenden Formteile, wobei eine Verschiebemöglichkeit zwischen den Segmenten und der Grundplatte gegeben ist, wobei die Verschiebemöglichkeit horizontal erfolgt zwischen der Grundplatte (8) und jedem Segment (9), **dadurch gekennzeichnet, dass** zwischen der Grundplatte (8) und jedem Segment (9) eine Einrichtung (13) zum Ausgleich des Gewichts des Segments (9) angeordnet ist, welche mit Luftaustrittsöffnungen (17) an der dem Segment (9) zugewandten Oberfläche der Grundplatte (8) versehen ist und die mit einer Druckluftquelle in Verbindung gebracht werden können.

2. Stanzwerkzeug nach Anspruch 1, **dadurch gekennzeichnet, dass** die Luftaustrittsöffnungen (17) mit einer Ansenkung (18) versehen sind.

3. Stanzwerkzeug nach Anspruch 1, **dadurch gekennzeichnet, dass** die Luftaustrittsöffnungen (17) mit einem Luftaustrittselement (19) versehen sind.

4. Stanzwerkzeug nach Anspruch 3, **dadurch gekennzeichnet, dass** die Luftaustrittselemente (19) als Sinterteil aus Metall, Kunststoff oder Keramik ausgebildet sind.

5. Stanzwerkzeug nach Anspruch 3 oder 4, **dadurch gekennzeichnet, dass** die Luftaustrittselemente (19) einen ringsum verlaufenden Kanal (20) aufweisen.

6. Stanzwerkzeug nach einem der Ansprüche 1 bis 5, **dadurch gekennzeichnet, dass** der Druck der den Luftaustrittsöffnungen (17) zugeführten Druckluft veränderbar ist.

7. Stanzwerkzeug nach einem der Ansprüche 1 bis 6, **dadurch gekennzeichnet, dass** bei einer mehrreihiger Ausbildung jeder Reihe an auszustanzenden Formteilen (4) ein Segment (9) zugeordnet ist, das mit der Einrichtung (13) zum Ausgleich seines Gewichts versehen ist.

8. Stanzwerkzeug nach einem der Ansprüche 1 bis 6, **dadurch gekennzeichnet, dass** jedem Formteil (4) ein Segment (9) zugeordnet ist, das mit der Einrichtung (13) zum Ausgleich seines Gewichts versehen ist.

## Claims

1. A stamping tool for cutting out deep-drawn mouldings from a film web for installation on a lower table movable in height in a stamping station of a thermoforming machine, consisting of a baseplate and segments arranged on the latter having cut lines having the stamping contour of the mouldings to be cut out, wherein there is a shifting possibility between the segments and the baseplate, wherein the shifting possibility is horizontal between the baseplate (8) and each segment (9), **characterized in that** between the baseplate (8) and each segment (9) a device (13) for balancing the weight of the segment (9) is arranged, which is provided with air outlet openings (17) on the surface of the baseplate (8) facing the segment (9) and which can be connected to a compressed air source.

2. The stamping tool according to Claim 1, **characterized in that** the air outlet openings (17) are provided with a countersink (18).

3. The stamping tool according to Claim 1, **characterized in that** the air outlet openings (17) are provided with an air outlet element (19).

4. The stamping tool according to Claim 3, **characterized in that** the air outlet elements (19) are formed as sintered part of metal, plastic or ceramic.

5. The stamping tool according to Claim 3 or 4, **characterized in that** the air outlet elements (19) have a circumferentially running channel (20).

6. The stamping tool according to any one of the Claims 1 to 5, **characterized in that** the pressure of the compressed air fed to the outlet air openings (17) is variable.

7. The stamping tool according to any one of the Claims 1 to 6, **characterized in that** with a multiple-row embodiment each row of mouldings (4) to be stamped out is assigned a segment (9), which is provided with the device (13) for offsetting its weight.

8. The stamping tool according to any one of the Claims 1 to 6, **characterized in that** each moulding (4) is assigned a segment (9), which is provided with the device (13) for offsetting its weight.

## Revendications

1. Outil d'estampage pour séparer des pièces moulées embouties d'un ruban de film pour intégration sur une table inférieure mobile en hauteur dans un poste d'estampage d'une machine de thermoformage, se composant d'un plateau de base et de segments disposés sur celui-ci avec des lignes de découpe présentant le contour d'estampage des formes moulées à séparer, sachant qu'il y a une possibilité de déplacement entre les segments et le plateau de base, sachant que la possibilité de déplacement s'effectue à l'horizontale entre le plateau de base (8) et chaque segment (9), **caractérisé en ce qu'**entre le plateau de base (8) et chaque segment (9), un dispositif (13) pour compenser le poids du segment (9) est disposé, lequel est doté d'orifices d'évacuation d'air (17) sur la surface du plateau de base (8) tournée vers le segment (9) et qui peuvent être raccordés à une source d'air comprimé.

2. Outil d'estampage selon la revendication 1, **caractérisé en ce que** les orifices d'évacuation d'air (17) sont dotés d'un chanfreinage (18).

3. Outil d'estampage selon la revendication 1, **caractérisé en ce que** les orifices d'évacuation d'air (17) sont dotés d'un élément d'évacuation d'air (19).

4. Outil d'estampage selon la revendication 3, **caractérisé en ce que** les éléments d'évacuation d'air (19) sont conçus en tant que pièce frittée en métal, plastique ou céramique.

5. Outil d'estampage selon la revendication 3 ou 4, **caractérisé en ce que** les éléments d'évacuation d'air (19) présentent un canal (20) sur tout le pourtour.

6. Outil d'estampage selon l'une des revendications 1 à 5, **caractérisé en ce que** la pression de l'air comprimé amené aux orifices d'évacuation d'air (17) est modifiable.

7. Outil d'estampage selon l'une des revendications 1 à 6, **caractérisé en ce que** dans une formation à plusieurs rangées, chaque rangée de pièces moulées (4) à estamper a un segment (9) doté du dispositif (13) pour compenser son poids.

8. Outil d'estampage selon l'une des revendications 1 à 6, **caractérisé en ce que** chaque pièce moulée (4) a un segment (9) doté du dispositif (13) pour compenser son poids.
